Europäisches Patentamt

European Patent Office

Office européen des brevets

(11) Publication number: **0 274 038**
**A2**

# EUROPEAN PATENT APPLICATION

(21) Application number: 87117224.3

(51) Int. Cl.⁴ **G03B 17/48**

(22) Date of filing: 23.11.87

(30) Priority: 05.12.86 IT 2260186

(43) Date of publication of application:
**13.07.88 Bulletin 88/28**

(84) Designated Contracting States:
**AT BE CH DE ES FR GB GR IT LI LU NL SE**

(71) Applicant: **S.I.F.I. Società Industria**
**Farmaceutica Italiana S.p.A.**
**Via Nicola Coviello 15/B**
**I-95128 Catania(IT)**

(72) Inventor: **Battaglia, Francesco**
**Viale Teracati n. 63**
**I-96100 Siracusa(IT)**

(74) Representative: **Giambrocono, Alfonso, Dr.**
**Ing. et al**
**Ing. A. Giambrocono & C. S.r.l. Via Rosolino**
**Pilo 19/B**
**I-20129 Milano(IT)**

(54) **Slit lamp or microscope with adapter for the connection of a reflex camera, and relative adapter.**

(57) The invention concerns a photographic slit lamp or a microscope, both provided with an adapter for the connection of an ordinary reflex camera, and the adapter itself. The adapter consists of a substantially cylindrical hollow body (12, 13) whose two ends are formed by threaded tabular appendixes (14, 15) one (15) of which can be screwed on the object lenses (11) of the camera (10) and the other (14) on any ocular (2, 8) of the slit lamp or microscope. Thanks to the adapter, it is possible to connect any ordinary reflex camera to the slit lamp or to the microscope.

Fig. 3

EP 0 274 038 A2

This invention refers to a photographic slit lamp or a microscope provided with an adapter allowing the connection between any ordinary reflex camera and the slit lamp or microscope. The invention also refers to the adapter itself which allows the above mentioned connection.

Photographic slit lamps by means of which it is possible to take photographs of the anterior chamber, iris, lens, corneal portion (by the slit) and, with Hruby's lens, the fundus, are known.

In photographic slit lamps the insertion of an image divider into the binocular microscope allows the same image, seen by the main observer, to be sent to two lateral exists. A camera and a tube for a second observer can be respectively connected to said exits. A special light source, e.g. flash lamps, is also used to give the slit lamp the lighting necessary to take sharp photographs.

A known system of light transmission through optical fibers is employed to obtain sharp photographs of the anterior chamber of teh eye and to adjust the background brightness of the image in slit photographs. The use of a quartz-iodine lamp or a lamp for high power flashlights enhances the brightness of the visual field make it possible to obtain high quality photographs.

At present, in photographic slit lamps the camera is connected to one of the lateral exits, on the right or on the left of the binocular microscope of an image-divider inserted in the slit lamp, by means of a rather complex connecting element provided with a diaphragm which operates by means of an adjustment ring nut. This connector is provided with a connecting body to which a suitable lensless camera can be attached.

In practice, only the body of the Olimpus OM-1 camera can be connected to the Mark F slit by Tekno Optical (Optikon), while only the body of the Contax RTS II camera can be connected to the slit Zeiss 30 SL/M.

The cost of the known connectors and the need for employing particular cameras increase the cost of thes apparatuses and often limit the use of slit lamps, thereby excluding the use of cameras.

The same problems also arise when a photograph must be taken through a microscope.

The main aim of the present invention is to realize an inexpensive and simply-built adapter allowing a quick and easy connection of any reflex camera with any ocular of either a slit lamp or a miscroscope in order to abtain high-quality photographs.

These and other goals may be achieved by a slit lamp provided with an adapter for connecting it with an ordinary reflex camera, characterized in that said adapter consists of a substantially cyclindrial hollow body whose two ends are formed by threaded tabular appendices one of which can be screwed on the lens of the camera, and the other on any ocular of the slit lamp or microscope.

Obviously the invention concerns also the adapter itself.

A preferred embodiment of the adapter and its connection with a slit lamp and a camera is described below as a non-limitative example making reference to the attached drawings, wherein:

-Figure 1 shows a perspective and exploded view of the adapter according to the invention;

-Figure 2 is an axial cross-section of the adapter as installed;

-Figure 3 is a perspective and exploded view of a slit lamp, with an ocular out of the binocular microscope, an adapter and a reflex camera;

-Figure 4 is a perspective view of a camera fixed to an ocular of the slit-lamp binocular microscope by means of the adapter according to the invention; and

-Figure 5 represents a schematic perspective view of a slit lamp on which a camera is installed by means of the adapter.

First of all, in order to understand where and how the adapter according to the invention can be used for connecting a reflex camera with a slit lamp, with reference to Figures 3 and 5, a known slit lamp will be briefly described. It is formed by a binocular microscope 1 provided with two oculars 2 and connected with an optical or image divider 3. Additional instruments or accessories may be connected to the two lateral exits 4 and 5 of said image divider. As illustrated, an auxiliary observation tube 7 is optically and mechanically connected with the lateral exit 4 by means of a rotating joint 6. Said observation tube 7 is provided with an ocular 8 through which a second person can directly observe the eye even while the main obseration is performed through the binocular microscope 1.

A further abservation tube similar to auxiliary observation tube 7, or a telecamera or a camera may be connected to exit 5.

In Figure 3, an ocular 2 of the binocular microscope is illustrated out of its seat.

The slit lamp so far briefly described is backed up by a bracket 9 supported by a pedestal or base which is not shown in the drawings.

Figures 3, 4 and 5 also show an ordinary camera 10 provided with its own object lenses 11 having a ring nut for adjusting the diaphragms.

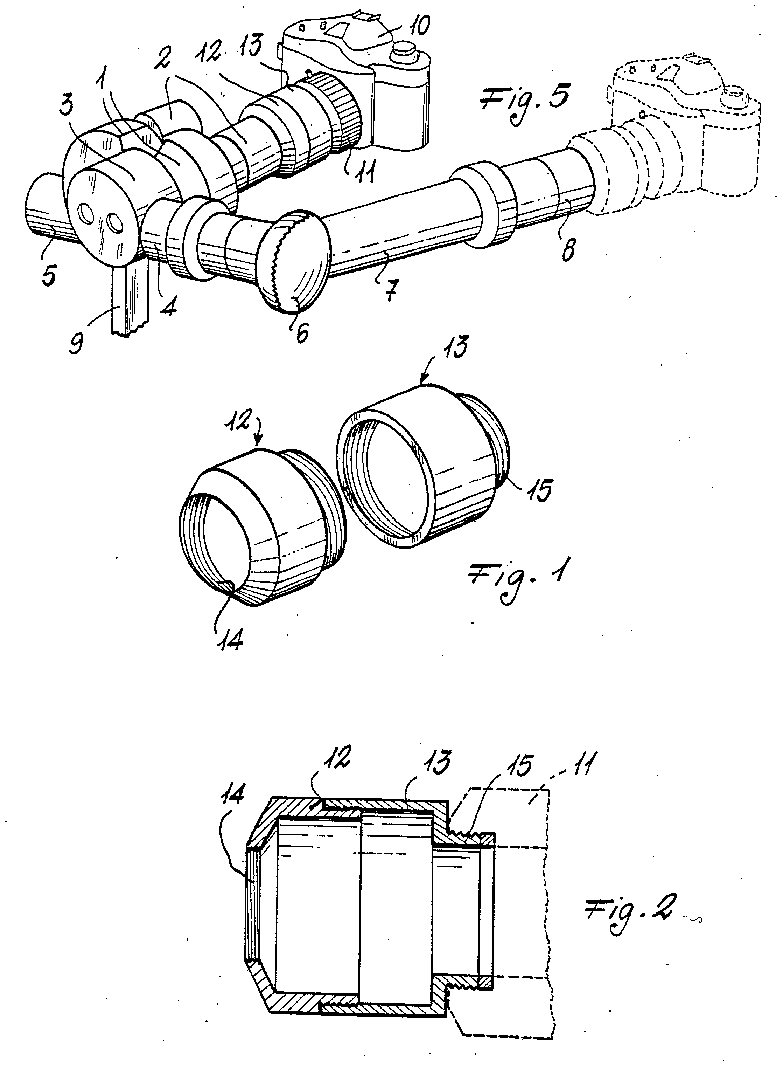

Reference is now made to Figures 1 and 2, wherein an embodiment of the adapter according to the invention is illustrated.

This adapter is made up of two distinct sections 12 and 13 which can be screwed one onto the other to form one hollow body (Figure 1) having two threaded ends or appendixes 14 and 15, respectively.

The threaded appendix 14 can be screwed on any of the slit lamp oculars 2 or 8, whereas the threaded appendix 15 can be screwed on the end of the object lenses 11 of the camera 10.

Oculars 2 or 8 are standard, while the reflex camera object lenses may differ one from the other. For this reason section 13 can be screwed on section 12. Section 13 is provided with the threaded appendix 15 compatible with the available reflex camera object lenses 11.

Clearly, whereas the drawings shown the adapter as consisting of two distinct sections 12 and 13, this can also be made in one piece. Obviously, its appendix 15 has to be compatible with reflex camera object lenses 11.

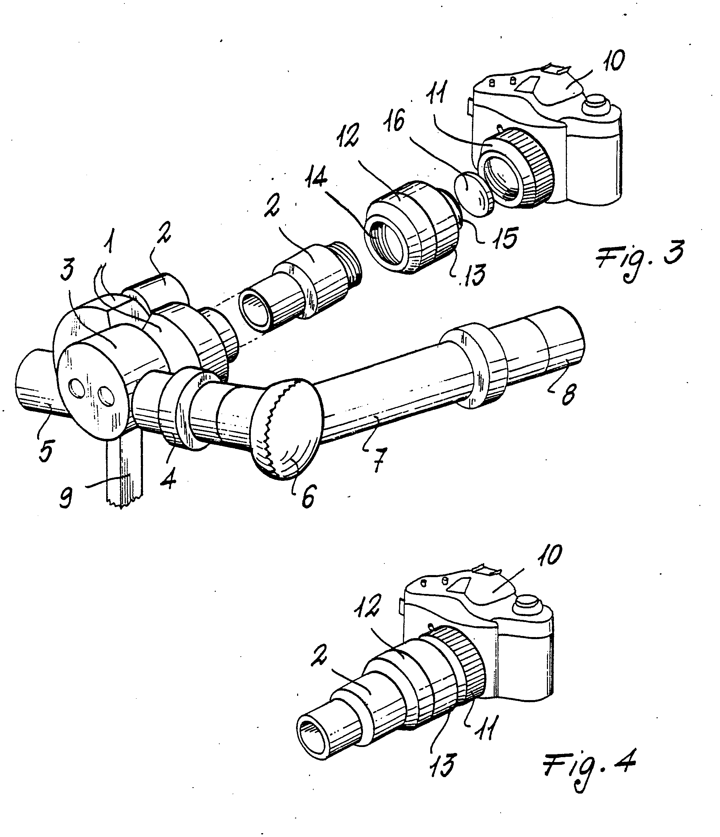

In order to connect the camera with the slit lamp, first one of the slit lamp oculars must be drawn out (ocular 2 in Figure 3); then the adapter (12, 13) is screwed on the ocular 2 and consequently on the camera's object lenses 11 (Figure 4), after possibly interposing (if it is needed) a filter or a reticle (16) (Figure 3) between the adapter and the object lenses of the reflex camera (Figure 4).

The ocular 2 with the camera 10 applied on, is then put in its seat in the binocular microscope 1 (Figure 5) or in the auxiliary tube 7, as represented by the dashed lines.

The above-described adapter can be easily made of any suitable material, for instance aluminium or plastic. By using the adapter according to the invention it is possible to connect an ordinary reflex camera with any slit lamp or microscope without any change in their structures. Moreover, it is possible to inexpensively photograph the anterior and the posterior chambers of the eye with results equivalent to those obtained when using the expensive instruments available on the market. Furthermore, use of the adapter allows the measuring of anatomic damages of the ocular structure by inserting a graduated reticle inside the ocular, which shows itself on the film, thus allowing the count of the endothelial cells. Measuring of the diameters of the optic-nerve head and taking any othe objective measurement the ophthalmologist should deem necessary are also possible.

In order to adjust the exposure of the film with the camera installed on the slit lamp, it is sufficient to use the camera light-meter as for a normal photograph.

The best photograms can be obtained leaving the slit open.

When the photograph has to be taken with the narrow slit, it is necessary to lighten simultaneously the background. This may be done using light from a light source, e.g. flash lamps, quartz--iodine lamps, and transmitted through optical fibers.

So far the use of an adapter on a slit lamp has been described, the adapter may be used to connect a reflex camera with a microscope. In this case all the above considerations apply.

The use of the adapter according to the invention affords many advantages, among which: use of the camera with its standard object lenses; psossibility of taking adavantage of all automatisms of reflex cameras, referring in particular to the light-meter for a correct exposure of the film without performing long and difficult tests; possibility of using a flash which works automatically with the camera and therefore gives the correct exposure; possibility of fitting it to any slit lamp or microscope at rather low cost.

## Claims

1. Slit lamp or microscope provided with an adapter (12, 13) for connecting said slit lamp or microscope with an ordinary reflex camera (10), characterized in that said adapter consists of a substantially cylindrical hollow body whose two ends are formed by threaded tabular appendixes (14, 15) one (15) of which can be screwed on the object lenses (11) of the camera (10), and the other (14) on any ocular (2, 8) of the slit lamp or microscope.

2. Adapter for directly connecting a slit lamp or a microscope with an ordinary reflex camera, characterized in that it consists of a substantially cylindrical hollow body (12, 13) whose two ends are formed by threaded tabular appendixes (14, 15) one (15) of which can be screwed on the object lenses (11) of the camera, and the other (14) on any ocular (2, 8) of the slit lamp or microscope.

3. Adapter of claim 2, characterized in that it consists of two separate sections (12 and 13) screwed on to each other.

0 274 038

Fig.5

Fig. 1

Fig.2

Fig. 3

Fig. 4